# EUROPÄISCHE PATENTSCHRIFT

(11) **EP 1 396 392 B1**
(45) Veröffentlichungstag und Bekanntmachung des Hinweises auf die Patenterteilung: **23.08.2006**
(21) Anmeldenummer: 03016630.0
(22) Anmeldetag: 30.07.2003
(51) Int. Cl.: B60R 21/16

(54) **Gassack mit Fangbändern**
Airbag with tethers
Coussin gonflable comportant des sangles de retenue

(30) Priorität: 04.09.2002 DE 20213651 U
(43) Veröffentlichungstag der Anmeldung: 10.03.2004
(73) Patentinhaber: TRW Automotive Safety Systems GmbH, 63743 Aschaffenburg (DE)
(72) Erfinder: Drechsler, Amrei, 63857 Waldaschaff (DE); Gross, Claudia, 97816 Lohr (DE); Isensee, Jan, 61118 Bad Vilbel (DE); Schütz, Dominik, 63857 Waldaschaff (DE)
(74) Vertreter: Kitzhofer, Thomas

(56) Entgegenhaltungen:
- EP-A- 0 611 683
- GB-A- 2 261 855
- US-A- 4 934 734
- PATENT ABSTRACTS OF JAPAN vol. 1995, no. 01, 28. Februar 1995 (1995-02-28) & JP 06 286541 A (TAKATA KK), 11. Oktober 1994 (1994-10-11)

## Beschreibung

Die Erfindung betrifft einen Gassack.

Die Anordnung von Fangbändern im Gassack ist ein bewährtes Mittel, um das Entfaltungsverhalten und die aufgeblasene Form des Gassacks festzulegen. Um die Kraftverteilung zwischen den Fangbändern und dem dem Insassen zugewandten Oberteil der Gassackwand zu verbessern, werden Verstärkungslagen eingesetzt, wobei die Befestigung der Fangbänder und der Verstärkungslagen an der Gassackwand normalerweise über Nähte erfolgt.

So ist bei dem in der JP-A-06 286541 gezeigten Gassack eine Verstärkungslage vorgesehen, die mittels einer ersten Naht am Gassackoberteil befestigt ist. Fangbänder erstrecken sich zwischen Ober- und Unterteil des Gassacks und sind mittels einer weiteren Naht gleichzeitig an der Verstärkungslage und am Gassackoberteil befestigt, wobei die erste Naht radial außerhalb der Befestigung der Fangbänder liegt.

Aus der US-A-4 934 734 ist bekannt, Fangbänder mit einer ringförmigen Verstärkungslage und gleichzeitig mit der Gassackoberseite zu vernähen.

Die Erfindung schafft einen Weg, um die Krafteinleitung und Kraftverteilung in der Gassackwand zu optimieren.

Dies wird durch die Merkmale des Anspruchs 1 erreicht. Diese Anordnung führt zu einer guten Kraftverteilung, da sowohl die vertikal wirkenden Kräfte, die beim Aufblasen des Gassacks von den Fangbändern in die Gassackwand eingeleitet werden, als auch die horizontal wirkenden Kräfte, die durch den Innendruck des Gassacks auf die Gassackwand übertragen werden, jeweils von einer der Nähte aufgenommen werden. Die Aufnahme der Kräfte kann auch in einer zeitlichen Staffelung erfolgen, wobei die von der oder den ersten Nähten aufgenommenen vertikalen Zugspannungen in der ersten Phase des Entfaltens des Gassacks und die von der oder den zweiten Nähten aufgenommenen horizontalen Zugspannungen in einer späteren Phase des Entfaltens aufgenommen werden. Durch das Vorsehen eines Verbindungsrings, der eine Aussparung im Zentrum aufweist, kann außerdem der Bereich der Gassackwand, an dem die Fangbänder befestigt sind, relativ flexibel gehalten werden, was für eine gleichmäßigere Krafteinleitung in die Gassackwand sorgt als bei einem scheibenförmigen Verbindungselement. Außerdem läßt sich so der Materialbedarf für den Gassack sowie das Volumen des gefalteten Gassacks reduzieren.

Es erweist sich als vorteilhaft, wenn die erste Naht radial einwärts des Übergangs der Fangbänder zum Verbindungsring angeordnet ist, da sich so der Verbindungsring besonders gut an der Gassackwand befestigen läßt.

Bevorzugt ist die zweite Naht radial außerhalb des Verbindungsrings angeordnet. Es hat sich gezeigt, daß so eine gute Krafteinleitung zu erzielen ist.

Im Gegensatz zum Verbindungsring ist die Verstärkungslage vorzugsweise scheibenförmig ausgebildet, weist also keinen zentralen Ausschnitt auf.

Sowohl der Verbindungsring als auch die Fangbänder und die Verstärkungslage können aus Gewebestücken bestehen. Die Zuschnittsreste, etwa der Ausschnitt des Verbindungsrings, können an anderen Stellen im Gassack z.B. als Verstärkung weiterverwendet werden.

Bevorzugt weist der Gassack einen kreisförmigen Querschnitt auf, und der Verbindungsring befindet sich im Zentrum des Kreises, so daß die Krafteinleitung möglichst symmetrisch erfolgt (bezogen auf eine Draufsicht auf den Gassack). Eine gleichmäßige Krafteinleitung wird unterstützt, wenn die Fangbänder symmetrisch und sternförmig am Verbindungsring angeordnet sind.

Selbstverständlich sind auch andere Gassackformen möglich, wobei Form des Verbindungsrings und Anordnung der Fangbänder auf die jeweilige Symmetrie abstimmbar sind.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 eine schematische Ansicht eines erfindungsgemäßen Gassacks;
- Figur 2 eine schematische Schnittansicht eines erfindungsgemäßen Gassacks;
- Figur 3 eine schematische Ansicht der Krafteinleitung in die Gassackwand bei einem erfindungsgemäßen Gassack; und
- Figur 4 eine schematische Ansicht der Krafteinleitung in die Gassackwand gemäß dem Stand der Technik.

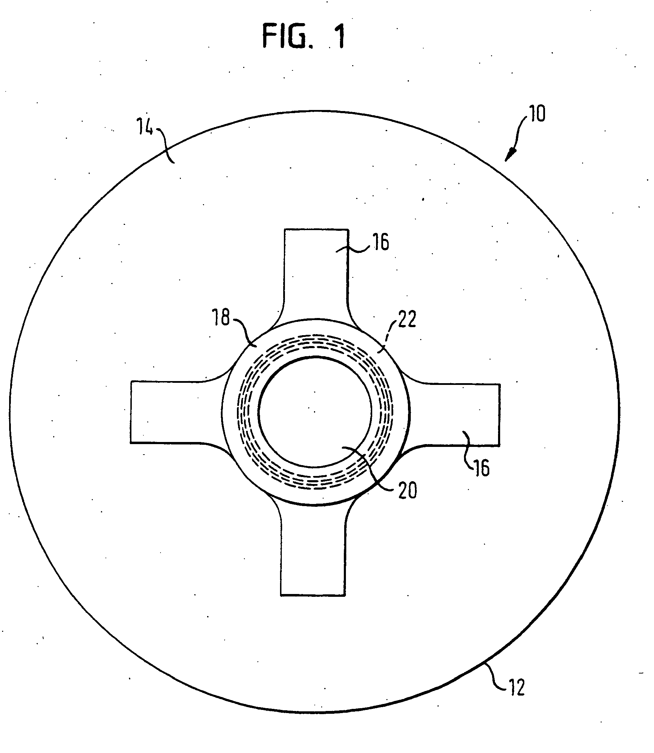

Figur 1 zeigt einen Gassack 10, der von einer Gassackwand 12 begrenzt ist, in Blickrichtung vom Inneren des Gassacks 10 auf dessen Oberteil 14. Das dem Oberteil 14 gegenüberliegende Unterteil mit dem Einblasmund ist nicht gezeigt. Das Oberteil 14 ist der Bereich des Gassacks 10, mit dem der Insasse in Kontakt kommt.

Oberteil 14 und Unterteil des Gassacks 10 sind zusätzlich durch Fangbänder 16 verbunden, die durch das Innere des Gassacks 10 verlaufen.

Die Fangbänder 16 sind mit einem geschlossen umlaufendenVerbindungsring 18 verbunden, der in seinem Inneren eine Aussparung 20 aufweist. Im hier gezeigten Beispiel sind Verbindungsring 18 und Fangbänder 16 zusammen als eine einstückige Gewebelage ausgeführt, sie können aber auch aus mehreren Abschnitten zusammengesetzt sein.

Der Verbindungsring 18 ist an der Innenseite des Gassacks 10 mit dessen Oberteil 14 verbunden, um die Fangbänder 16 an der Wand 12 zu fixieren, wobei zwischen Verbindungsring 18 und Gassackoberteil 14 eine Verstärkungslage 22 angeordnet ist. Die Verstärkungslage ist vorzugsweise ebenfalls eine Gewebelage und hat eine scheibenförmige Gestalt, weist also keine Aussparung auf. Es können auch mehrere Verstärkungslagen vorgesehen sein

Die nicht mit dem Verbindungsring 18 verbundenen Enden der Fangbänder 16 sind auf bekannte Weise z.B. an dem Unterteil des Gassacks befestigt.

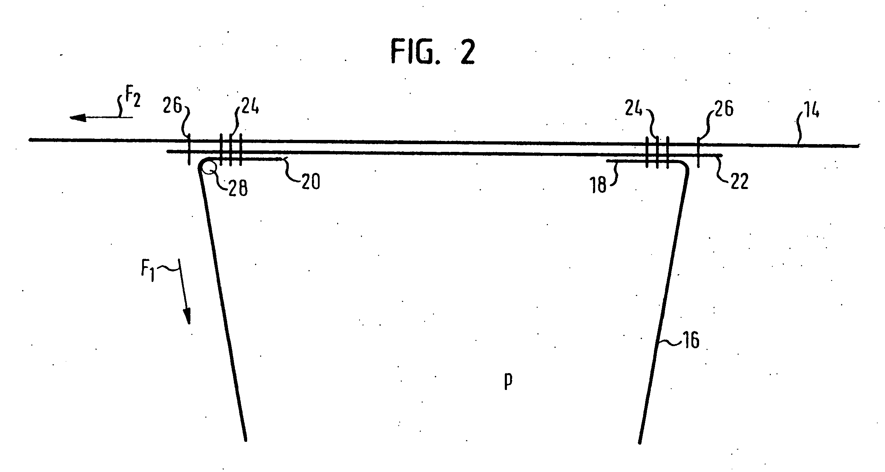

Die Befestigung der Fangbänder 16 an dem Gassackoberteil 14 ist näher in Figur 2 dargestellt. Erste Nähte 24, im hier gezeigten Beispiel drei Nähte, verbinden den Verbindungsring 18, die Verstärkungslage 22 und das Oberteil 14 des Gassacks 10 fest miteinander. Radial auswärts der ersten Nähte 24 ist eine zweite Naht 26 vorgesehen, die nur die Verstärkungslage 22 mit dem Oberteil 14 des Gassacks verbinden. Die Zahl der Nähte ist nicht auf die im hier gezeigten Beispiel angegebenen beschränkt.

Im hier gezeigten Beispiel liegt die zweiten Naht 26 radial außerhalb des Verbindungsrings 18. Sie liegt auch jeweils radial außerhalb einer Stelle 28, an der ein Fangband 16 in den Verbindungsring 18 übergeht und die im wesentlichen mit der Stelle zusammenfällt, an der das Fangband 16 vom Verbindungsring 18 ins Innere des Gassacks 10 abknickt.

Sowohl die ersten Nähte 24 als auch die zweite Naht 26 sind hier so ausgebildet, daß sie den Verbindungsring 18 bzw. die Verstärkungslage 22 umfangsmäßig vollständig umrunden. Während die ersten Nähte 24 in der Mitte des Verbindungsrings 18 verlaufen, sind die zweiten Nähte 26 in diesem Beispiel am Rand der Verstärkungslage 22 angeordnet.

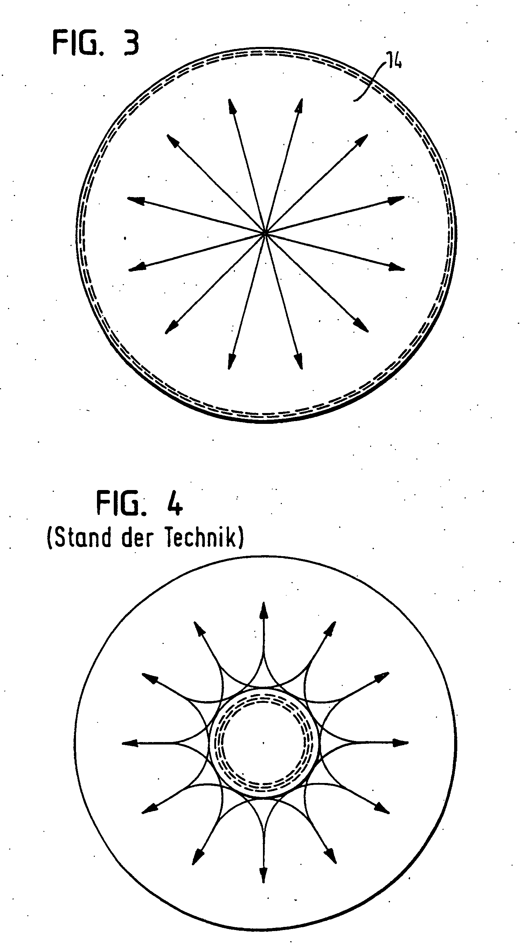

Die ersten und zweiten Nähte 24, 26 dienen der Aufnahme verschiedener Kräfte. Die ersten Nähte 24 nehmen vor allem vertikal wirkende Kräfte F₁ auf, die von den Fangbändern 16 auf die Gassackwand 12 übertragen werden. Die zweiten Nähte 26 hingegen nehmen vor allem horizontale Kräfte F₂ auf, die durch den Innendruck p des Gassacks 10 hervorgerufen werden. Durch das Vorsehen spezieller Nähte 24, 26 für die Aufnahme der jeweiligen Kräfte F₁, F₂ läßt sich eine vorteilhafte Krafteinleitung in die Gassackwand erzielen. Die Aussparung 20 des Verbindungsrings 18 trägt ebenfalls zu einer gleichmäßigeren Verteilung der Kräfte bei, da hierdurch das Oberteil 14 des Gassacks flexibler gehalten ist als bei einem scheibenförmigen Fangbandträger. Schematisch ist die Krafteinleitung in Figur 3 dargestellt, die den Spannungsverlauf auf dem Oberteil 14 des Gassacks 10 zeigt. Im Vergleich dazu ist in Figur 4 der Spannungsverlauf in einem herkömmlichen Gassack dargestellt.

Wie in Figur 1 zu sehen ist, ist bei einem kreisförmigen Gassack der Verbindungsring 18 bevorzugt kreisringförmig gestaltet und, bezogen auf den Querschnitt des Gassacks 10, in der Mitte des Gassacks 10 angeordnet.

Die Idee der Erfindung ist auch auf andere Gassackformen übertragbar, wobei die Form des Verbindungsrings der Form des Gassacks angepaßt werden kann.

Die Anordnung der Nähte und der Fangbänder am Verbindungsring sind hier nur beispielhaft dargestellt. Die optimale Ausbildung kann von einem Fachmann je nach den gegebenen Anforderungen ermittelt werden.

## Patentansprüche

1. Gassack, mit einer ein Oberteil (14) umfassenden Gassackwand (12) und das Oberteil (14) mit einem gegenüberliegenden Abschnitt der Gassackwand (12) verbindenden Fangbändern (16), die von einem Verbindungsring (18) ausgehen, wobei der Verbindungsring (18) und die Fangbänder (16) einstückig verbunden und durch ein gemeinsames Gewebestück gebildet sind,
wobei zwischen dem Verbindungsring (18) und dem Oberteil (14) wenigstens eine Verstärkungslage (22) vorgesehen ist und
wobei wenigstens eine erste Naht (24) vorgesehen ist, die den Verbindungsring (18) und die Verstärkungslage (22) an dem Oberteil (14) befestigt, und
wenigstens eine zweite Naht (26) vorgesehen ist, die nur die Verstärkungslage (22) an dem Oberteil (14) befestigt, wobei die zweite Naht (26) radial außerhalb der ersten Naht (24) angeordnet ist.

2. Gassack nach Anspruch 1, **dadurch gekennzeichnet, daß** die erste Naht (24) radial einwärts des Übergangs (28) der Fangbänder (16) zum Verbindungsring (18) angeordnet ist.

3. Gassack nach einem der vorhergehenden Ansprüche, **dadurch gekennzeichnet, daß** die zweite Naht (26) radial außerhalb des Verbindungsrings (18) angeordnet ist.

4. Gassack nach einem der vorhergehenden Ansprüche, **dadurch gekennzeichnet, daß** die Verstärkungslage (22) scheibenförmig ist.

5. Gassack nach einem der vorhergehenden Ansprüche, **dadurch gekennzeichnet, daß** der Verbindungsring (18), die Fangbänder (16) und die Verstärkungslage (22) aus Gewebestücken bestehen.

6. Gassack nach einem der vorhergehenden Ansprüche, **dadurch gekennzeichnet, daß** der Gassack (10) einen kreisförmigen Querschnitt aufweist und daß sich der Verbindungsring (18) im Zentrum des Kreises befindet.

## Claims

1. A gas bag comprising a gas bag wall (12) having an upper portion (14) and limiting straps (16) connecting the upper portion (14) with an opposite section of the gas bag wall (12), the limiting straps (16) originating from a connecting ring (18), the connecting ring (18) and the limiting straps (16) being integrally connected and being formed by a common piece of fabric,
at least one reinforcement layer (22) being provided between the connecting ring (18) and the upper portion (14), and
at least one first seam (24) being provided, which fastens the connecting ring (18) and the reinforcement layer (22) to the upper portion (14), and
at least one second seam (26) being provided, which only fastens the reinforcement layer (22) to the upper portion (14), the second seam (26) being arranged radially outside the first seam (24).

2. The gas bag according to claim 1, **characterized in that** the first seam (24) is arranged radially inwards of the transition (28) of the limiting straps (16) to the connecting ring (18).

3. The gas bag according to either of the preceding claims, **characterized in that** the second seam (26) is arranged radially outside the connecting ring (18).

4. The gas bag according to any of the preceding claims, **characterized in that** the reinforcement layer (22) is disc-shaped.

5. The gas bag according to any of the preceding claims, **characterized in that** the connecting ring (18), the limiting straps (16) and the reinforcement layer (22) consist of fabric pieces.

6. The gas bag according to any of the preceding claims, **characterized in that** the gas bag (10) has a circular cross-section and that the connecting ring (18) is situated in the centre of the circle.

## Revendications

1. Coussin à gaz comportant une paroi de coussin à gaz (12) comprenant une partie supérieure (14) et des bandes de garde (16) reliant la partie supérieure (14) au tronçon opposé de la paroi de coussin à gaz (12), lesquelles bandes de garde (16) sont issues d'une bague de liaison (18), la bague de liaison (18) et les bandes de garde (16) étant reliées d'un seul tenant et formées par une pièce de tissu commune,
au moins une couche de renforcement (22) étant prévue entre la bague de liaison (18) et la partie supérieure (14) et
au moins une première couture (24) étant prévue, laquelle fixe la bague de liaison (18) et la couche de renforcement (22) sur la partie supérieure (14), et
une deuxième couture (26) étant prévue, laquelle fixe seulement la couche de renforcement (22) sur la partie supérieure (14), la deuxième couture (26) étant agencée radialement à l'extérieur de la première couture (24).

2. Coussin à gaz selon la revendication 1, **caractérisé en ce que** la première couture (24) est agencée radialement vers l'intérieur du passage (28) des bandes de garde (16) vers la bague de liaison (18).

3. Coussin à gaz selon l'une des revendications précédentes, **caractérisé en ce que** la deuxième couture (26) est agencée radialement à l'extérieur de la bague de liaison (18).

4. Coussin à gaz selon l'une des revendications précédentes, **caractérisé en ce que** la couche de renforcement (22) est en forme de disque.

5. Coussin à gaz selon l'une des revendications précédentes, **caractérisé en ce que** la bague de liaison (18), les bandes de garde (16) et la couche de renforcement (22) sont en pièces de tissu.

6. Coussin à gaz selon l'une des revendications précédentes, **caractérisé en ce que** le coussin à gaz (10) présente une section transversale circulaire et **en ce que** la bague de liaison (18) se trouve au centre du cercle.
